(19) Europäisches Patentamt

European Patent Office

Office européen des brevets

(11) Veröffentlichungsnummer: **0 474 655 B1**

(12) **EUROPÄISCHE PATENTSCHRIFT**

(45) Veröffentlichungstag der Patentschrift: **17.08.94**

(21) Anmeldenummer: **90906995.7**

(22) Anmeldetag: **11.05.90**

(86) Internationale Anmeldenummer:
**PCT/EP90/00761**

(87) Internationale Veröffentlichungsnummer:
**WO 90/15360 (13.12.90 90/28)**

(51) Int. Cl.⁵: **G02F 1/1333**

(54) **FERROELEKTRISCHES FLÜSSIGKRISTALLDISPLAY MIT GRAUSTUFEN BZW. EINER KONTINUIERLICHEN GRAUSKALA.**

(30) Priorität: **30.05.89 DE 3917472**

(43) Veröffentlichungstag der Anmeldung:
**18.03.92 Patentblatt 92/12**

(45) Bekanntmachung des Hinweises auf die
Patenterteilung:
**17.08.94 Patentblatt 94/33**

(84) Benannte Vertragsstaaten:
**CH DE LI NL**

(56) Entgegenhaltungen:
**EP-A- 0 032 362**
**EP-A- 0 152 827**
**EP-A- 0 316 708**
**EP-A- 0 357 463**

**PATENT ABSTRACTS OF JAPAN, vol. 13, no. 30, (P-816)(3378), 24 January 1989 ; & JP-A-63228124**

(73) Patentinhaber: **HOECHST AKTIENGESELL-SCHAFT**

**D-65926 Frankfurt (DE)**

(72) Erfinder: **DÜBAL, Hans-Rolf**
**Heuhohlweg 6**
**D-6240 Königstein/Taunus (DE)**
Erfinder: **ESCHER, Claus**
**Amselweg 3**
**D-6109 Mühltal (DE)**
Erfinder: **ILLIAN, Gerhard**
**Rauenthalerweg 32**
**D-6230 Frankfurt am Main 80 (DE)**
Erfinder: **MURAKAMI, Mikio**
**New Town Blg. 202,**
**8-1, Minami 2-chome**
**Kakegawa-shi, Shizuoka-ken (JP)**
Erfinder: **OHLENDORF, Dieter**
**Am Kühlen Grund 4**
**D-6237 Liederbach (DE)**

**PATENT ABSTRACTS OF JAPAN, vol. 12, no. 140, (P-696)(2987), 28 April 1988 ; & JP-A-62262022**

## Beschreibung

Ferroelektrische Flüssigkristalle eignen sich bekanntlich als schaltbares Medium unter anderem zur Herstellung hochauflösender Matrixdisplays für Computer-, Graphik- und Fernsehbildschirme, da sie kurze Schaltzeiten und steile elektro-optische Kennlinien besitzen. Ein ferroelektrisches Flüssigkristalldisplay (im folgenden FLC-Display) ist bekanntlich wie folgt aufgebaut:

Es besteht aus zwei Glas- oder Kunststoffplatten, die mit einer leitfähigen und transparenten Schicht derart versehen sind, daß eine Seite horizontale Streifen dieser Schicht aufweist (sog. Zeilenelektroden oder einfach "Zeilen") und auf der anderen Seite vertikale Streifen (Spaltenelektroden oder einfach "Spalten") vorliegen.

Zwischen den beiden Platten befindet sich die Flüssigkristallschicht, die durch eine oder zwei Orientierungsschichten gleichmäßig ausgerichtet ist. Orientierungsschichten sind in der Regel dünne Polymerschichten, die nach spezieller Oberflächenbehandlung, wie z.B. nach Reiben oder Aufrauhen, die Längsachsen der Flüssigkristalle homogen ausrichten. Die Orientierungsschichten können aber auch aus anorganischen Materialien, wie z.B. Siliziumoxid, bestehen und durch andere Verfahren, wie z.B. Schrägbedampfung, orientiert werden.

Zusätzlich benötigt man eine oder zwei Polarisationsfolien und üblicherweise eine Farbfiltermatrix zur Farbdarstellung. Ferner können Passivierungs-, Antireflex- und sonstige Schichten vorhanden sein.

Solche Displays sind in EP-A-0 032 362 beschrieben.

FLC-Displays eignen sich bekanntlich sehr gut zur Darstellung von hochaufgelösten Schwarz-/Weißbildern oder einfarbigen Bildern. Da diese Displays ein bistabiles Medium (den ferroelektrischen Flüssigkristall) ausnutzen, sind nur zwei Zustände - je nach der Richtung des von Außen angelegten Feldes - stabil und lassen sich bei geeigneter Displaykonstruktion den Helligkeitswerten schwarz und weiß zuordnen. Zwischenwerte der Helligkeit - sogenannte Grauwerte oder Graustufen - lassen sich jedoch nicht realisieren, da diese Zustände instabil sind.

Andererseits benötigt man zu einer vollständigen Bild-, insbesondere Farbbild-, Darstellung diese Grauwerte. Daher ist das Graustufenproblem für FLC-Displays bisher von vielen Arbeitsgruppen weltweit bearbeitet worden. Eine Übersicht über den gegenwärtigen Stand der Technik geben Leroux et al., Proceedings of the 1988 International Display Research Conference, San Diego, Seiten 111-113.

Die Verfahren zur Erzeugung von Graustufen lassen sich in drei Gruppen einteilen.

Bei der zeitlichen Integration wird ein Bildpunkt sehr schnell zwischen schwarz und weiß geschaltet, so daß das Auge einen Grauwert wahrnimmt, dessen Helligkeit von dem Anteil der weißen Perioden abhängt. Dieses Verfahren hat den Nachteil, daß für Matrixdisplays äußerst hohe, derzeit nicht realisierbare, Anforderungen an die Schaltzeit der Flüssigkristalle gestellt werden.

Bei der räumlichen Integration werden die einzelnen Bildpunkte in kleinere Flächen unterteilt bzw. mehrere Bildpunkte zu einem zusammengefaßt. Der Helligkeitsgrad ergibt sich durch den Anteil weiß geschalteter Flächen.

Dieses Verfahren hat den Nachteil, daß sich dadurch die Anzahl der elektrischen Kontaktierungen sowie der benötigten elektronischen Treiber - ICs (integrated circuits) stark erhöht wird, was die Fertigung der Displays erschwert und erheblich verteuert.

Ein weiteres Verfahren benötigt weder kürzere Schaltzeiten noch mehr Kontaktierungen und Treiber, sondern nutzt eine Dickenänderung der FLC-Schicht aus. Wenn man auf jedem einzelnen Bildpunkt durch Dickenänderung z.B. der Orientierungsschicht oder durch z.B. treppenförmige Strukturen der Elektroden die Dicke der Flüssigkristallschicht variiert, so beeinflußt man über einen Bildpunkt hinweg das den Flüssigkristall schaltende elektrische Feld gemäß der Gleichung = $(E = U_{LC}/d)$, wobei $U_{LC}$ die direkt am Flüssigkristall anliegende Spannung und d die Flüssigkristallschichtdicke der Teilfläche eines Bildpunktes bedeuten. Sind die Schichtdicken $d_1$, $d_2$, $d_3$ usw. innerhalb eines Bildpunktes unterschiedlich (z.B. $d_1 < d_2 < d_3$), so ergeben sich als elektrische Felder $E_1 = U_{LC}/d_1$, $E_2 = U_{LC}/d_2$, $E_3 = U_{LC}/d_3$, usw. Bei kontinuierlicher Erhöhung von $U_{LC}$ schaltet dann zunächst die Teilfläche mit der dünnsten FLC-Schicht ($d_1$), erst bei weiterer Erhöhung von $U_{LC}$ die Teilfläche mit den nächstgrößeren Dicke ($d_2$), schließlich bei weiterer Erhöhung von $U_{LC}$ die Teilfläche mit der größten Dicke ($d_3$). Der Bildpunkt kann also stufenweise heller geschaltet werden.

Dieses in US 4 712 877 beschriebene Verfahren benötigt weder sehr kurze Schaltzeiten noch zusätzliche Kontaktierungen und Treiber, hat jedoch den Nachteil, daß sich durch die Veränderung der Dicke der Flüssigkristallschicht auch die Doppelbrechung und damit die Farbe des Bildpunktes verändert. Die Teilflächen schalten also bei verschiedenen äußeren Schwellspannungen durch, besitzen jedoch unterschiedliche Farben. Daher ist die Farbtauglichkeit eines solchen FLC Displays erheblich eingeschränkt. Wenn z.B. ein FLC Display mit einer FLC-Mischung mit $\Delta n = 0{,}13$ gefüllt ist ($\Delta n$ ist die Differenz der

EP 0 474 655 B1

Brechungsindizes $n_\parallel$ und $n_\perp$), so erscheint der Hellzustand des Displays weiß bei einer Schichtdicke von $d_1$ = 2 $\mu$m. Um nun die Schwellspannung um 10 % zu vergrößeren muß die Schichtdicke auf $d_2$ = 2,2 $\mu$m ansteigen. Die Teilfläche mit $d_2$ = 2,2 $\mu$m besitzt dann aber einen störenden Gelbstich.

Aufgabe der vorliegenden Erfindung ist ein ferroelektrisches Flüssigkristall-Display zur Darstellung von Graustufen, das weder verkürzte Schaltzeiten noch mehr Kontaktierungen oder Treiber benötigt noch zu einem unerwünschten Farbschalten führt.

Diese Aufgabe wird erfindungsgemäß durch ein ferroelektrisches Flussigkristall-Display mit den Merkmalen des Anspruch 1 gelöst.

Ein Farbschalten kann nur verhindert werden, wenn die Dicke der Flüssigkristallschicht über den gesamten Schaltbereich des Displays, d.h. für alle Bildpunkte, konstant bleibt. Andererseits muß-will man nicht mehr Zuleitungen und Treiber oder kürzere Schaltzeiten verwenden - das effektive elektrische Feld über einen Bildpunkt hinweg räumlich variiert werden können. Grundlage der vorliegenden Erfindung ist somit die Einteilung eines Bildpunktes (der üblicherweise die Dimension von etwa 50 bis 1000 $\mu$m besitzt) in Teilflächen oder Zonen, in denen bei gleicher äußerer Spannung das effektive elektrische Feld verschieden ist aber die Flüssigkristallschichtdicke sich nicht ändert.

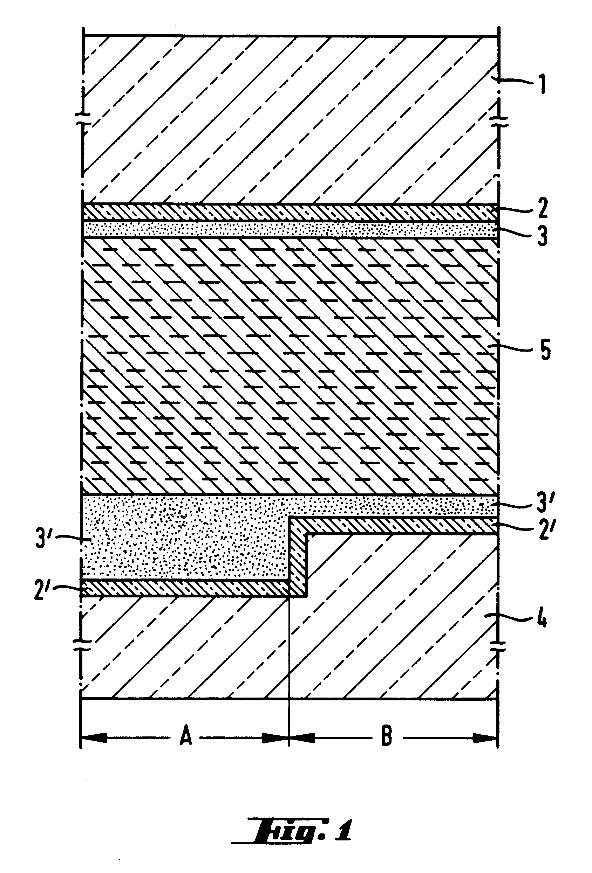

Fig. 1 zeigt beispielhaft den Aufbau eines solchen Bildpunktes. Die obere Glasplatte (1) ist eben. Sie ist beschichtet mit einer leitfähigen transparenten Schicht (2) und einer Orientierungsschicht (3). Die untere Glasplatte (4 ) besitzt mindestens eine Stufe und in diesem Fall zwei Teilflächen A und B pro Bildpunkt. Oberhalb der leitfähigen Schicht (2') wird nun die Orientierungsschicht (3') derart aufgebracht, daß sie die Stufe ausgleicht und die Dicke der Flüssigkristallschicht (5) konstant bleibt.

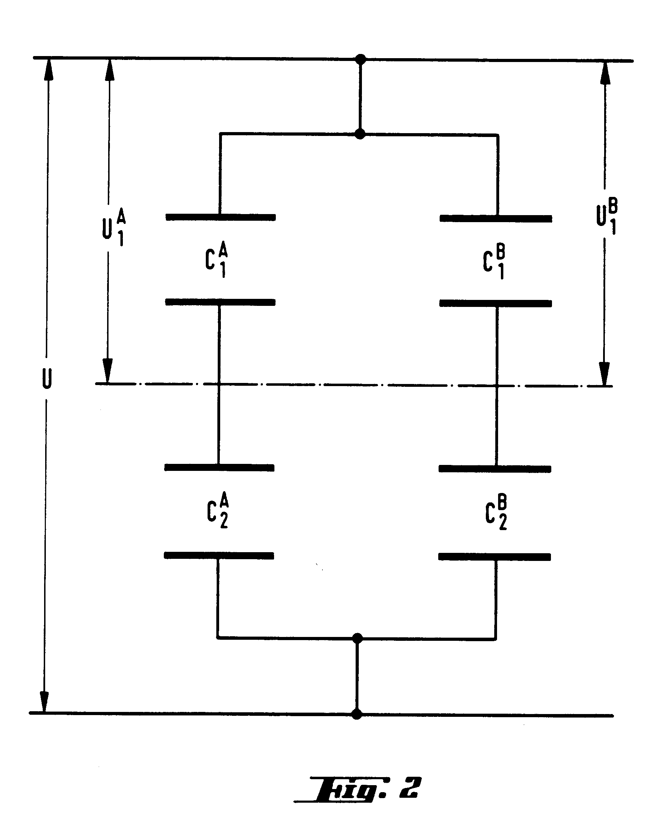

Fig. 2 zeigt ein vereinfachtes elektrisches Schaltbild dieses Bildpunktes. U ist die äußere, d.h. die an den Elektroden anliegende Spannung. $A^A$ und $A^B$ kennzeichnen die beiden Teilflächen in Fig. 1. Die Indizes 1 und 2 stehen für die Flüssigkristallschicht und für die Orientierungsschicht. Da die Flüssigkristallschichtdicke konstant ist, ist bei gleich großen Teilflächen die Kapazität $C_1^A$ und $C_1^B$ gleich groß. Da die Orientierungsschichten verschieden dick sind, ist $C_2^A$ ungleich $C_2^B$ (im Fall von Fig. 1 ist $C_2^A$ kleiner als $C_2^B$ ). Die effektiven elektrischen Felder in den Teilbereichen A und B werden durch die folgenden Gleichungen beschrieben:

$$E_1^A = U_1^A/d_1 \qquad\qquad (1)$$

$$E_1^B = U_1^B/d_1, \qquad\qquad (2)$$

wobei $d_1$ die Dicke der Flüssigkristallschicht ist. Entsprechend der Serienschaltung gilt für die Spannungen $U_1^A$ und $U_1^B$ :

$$U_1^A = \frac{C_2^A}{C_1^A + C_2^A} \; U \qquad\qquad (3)$$

$$U_1^B = \frac{C_2^B}{C_1^B + C_2^B} \; U \qquad\qquad (4)$$

Für alle in Gl. (3) und (4) vorkommenden Kapazitäten läßt sich die Formel für einen einfachen Plattenkondensator anwenden:

$$C_1^A = \epsilon_0 \; \frac{\epsilon_1 A^A}{d_1} \qquad\qquad (5)$$

4

$$c_1^B = \epsilon_0 \frac{\epsilon_1 A^B}{d_1} \qquad (6)$$

$$c_2^A = \epsilon_0 \frac{\epsilon_2 A^A}{d_2^A} \qquad (7)$$

$$c_2^B = \epsilon_0 \frac{\epsilon_2 A^B}{d_1^B} \qquad (8)$$

Aus Gl. (1) bis (8) ergeben sich die auf den Flüssigkristall wirkenden elektrischen Felder:

$$E_1^A = \frac{(U/d_1)}{1 + \frac{\mathcal{E}_1 d_2^A}{d_1 \mathcal{E}_2}} \qquad (9)$$

$$E_1^B = \frac{(U/d_1)}{1 + \frac{\mathcal{E}_1 d_2^B}{d_1 \mathcal{E}_2}} \qquad (10)$$

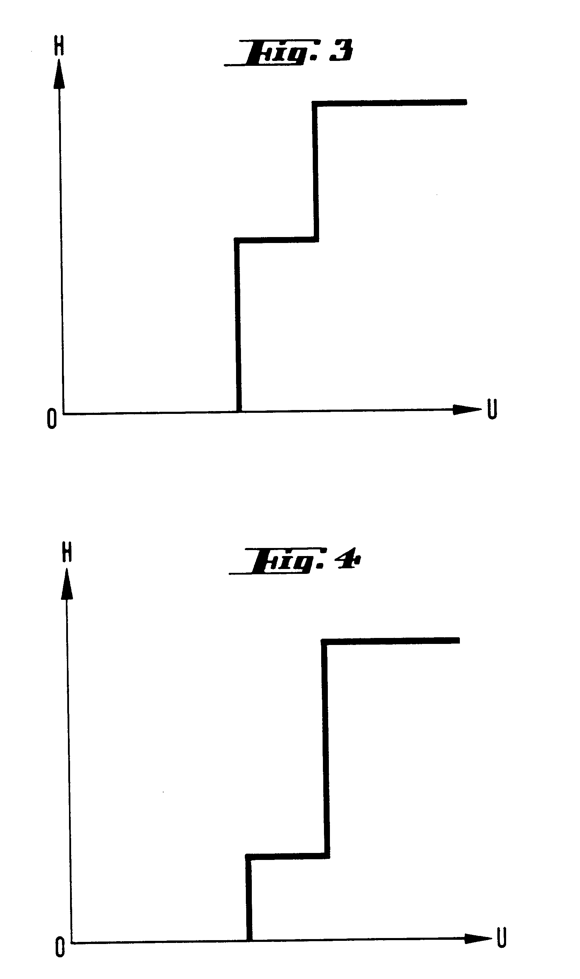

Aus diesen Überlegungen ergeben sich eine Reihe von für die Anwendung wesentlichen Schlußfolgerungen. Erstens sind bei gleicher äußerer Spannung die wirksamen Felder $E_1^A$ und $E_1^B$ in den Teilflächen A und B verschieden. Es wird zuerst die Teilfläche schalten, bei der das Verhältnis ($\epsilon_1 d_2/\epsilon_2 d_1$) kleiner ist, d.h. entsprechend Figur 1 die Teilfläche B mit der dünneren Orientierungsschicht. Daraus folgt, daß die beiden Teilflächen verschiedene Werte der Schwellspannungen besitzen. Erst bei einer Erhöhung der äußeren Spannung wird auch die Teilfläche mit der dickeren Orientierungsschicht durchschalten. Fig. 3 zeigt auf der Ordinate die Helligkeit (H), auf der Absizze die Spannung (U). Man erhält für den nach Fig. 1 aufgebauten Bildpunkt zwischen gekreuzten Polarisatoren daher drei Helligkeitsstufen (z.B. schwarz-grau-weiß), jedoch keine Farbänderung.

Zweitens sind die Schwellspannungen nicht von der Größe der Teilflächen $A^A$ und $A^B$ oder deren Verhältnis abhängig. Man kann daher durch Variations der Teilflächen die Helligkeitsstufe regeln ohne eine Veränderung der Schwellspannungen hinnehmen zu müssen.

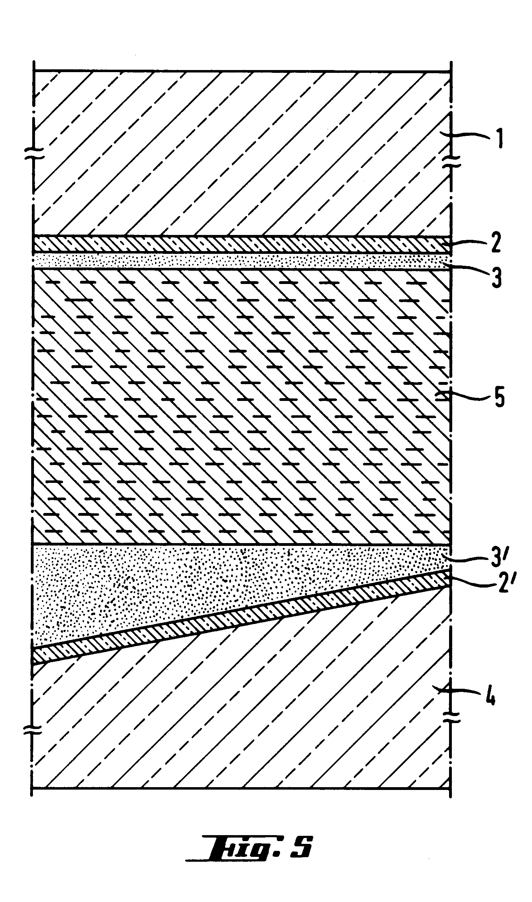

Fig. 4 zeigt eine Kennlinie für ein Flächenverhältnis $A^A/A^B$ von 3:1. Man erhält nun ein dunkleres Grau als in Fig. 3.

Drittens kann man die Schwellspannungen bei gegebenen Flüssigkristallwerten $\epsilon_1$ und $d_1$ sowohl durch Variation von $d_2$ (wie im obigen Beispiel) als auch durch Variation der dielektrischen Konstante $\epsilon_2$ oder eine Kombination von $d_2$ und $\epsilon_2$ erfindungsgemäß beeinflussen. Die Dicke der Orientierungsschicht kann z.B. in den Teilflächen A und B gleich sein aber dennoch lassen sich durch die Aufbringung zweier verschiedener Orientierungsschichten mit verschiedenen dielektrischen Konstanten $\epsilon_2^A$ und $\epsilon_2^B$ verschiedene Schwellspannungen in den beiden Teilflächen erhalten und daher eine Graustufe.

Mit dem beschriebenen Verfahren läßt sich die elektrooptische Kennlinie des FLC-Displays fast beliebig beeinflussen. Über die Aufteilung der Teilflächen lassen sich z.B. lineare, quadratische oder logarithmische Graustufen oder auch kontinuierliche Grauskalen realisieren.

Der Erläuterung der Erfindung dienen die nachfolgend aufgeführten Anwendungsbeispiele.

**Beispiel 1**

Zur Demonstration der Graustufen werden FLC-Testzellen der Elektrodenfläche 8 mm x 4 mm hergestellt. Dazu werden kommerziell erhältliche Indium-Zinnoxid-beschichtete Glasplatten mit Polyamidcarbonsäurelösungen beschichtet, diese Naßfilme imidisiert und anschließend mit Samt gerieben, so daß auf jeder Glasseite eine Polyimid-Orientierungsschicht entsteht. Die Gläser werden unter Verwendung von 2 $\mu$m dicken Glasabstandshaltern so verklebt, daß die Flüssigkristallschichtdicke exakt 2 $\mu$m beträgt. Auf der einen Hälfte des Demostrationsbildpunktes hat jedoch die Polyimidschicht eine Dicke von 20 nm (sowohl auf der oberen als auf der unteren Glasplatte) während die zweite Hälfte des Demonstrationsbildpunktes mit je 100 nm Polyimid beschichtet wird. Dieses Demonstrationsdisplay wird mit der handelsüblichen ferroelektrischen LC-Mischung ®Felix-001 (Hersteller Hoechst AG, Frankfurt; beschrieben in Ferroelectrics 84, Seite 89 ff, 1988) gefüllt.

Zum Nachweis der Graustufen wird die Zelle zwischen gekreuzten Polarisatoren positioniert. Zum Schalten legt man bei einer Temperatur von 25 °C Spannungsimpulsfolgen an, die jeweils aus einem Paar bipolarer Pulse bestehen. Der erste Puls hat eine Amplitude von ± 16V bei einer Pulsbreite von 500 $\mu$s; der zweite - dem ersten gegenüber um 20 ms verzögerte - Puls hat eine zeitliche Breite von 200 $\mu$s bei variabler Spannungsamplitude und umgekehrter Polarität (siehe z.B. H.R. Dübal et. al. Japanese Journal of Applied Phycics Vol. 27, 12 (1988), 2241-2244).

Die Zelle wird so positioniert, daß nach dem ersten Puls ein Dunkelzustand eingestellt ist. Solange die Amplitude des zweiten Pulses unterhalb von 16,2 V liegt, bleibt der Dunkelzustand erhalten: der Bildpunkt ist schwarz. Bei 16,2 V schaltet die Teilfläche mit der dünnen Orientierungsschicht, während die mit der dicken Orientierungsschicht dunkel bleibt. Erst bei 17,6 V schaltet auch die zweite Teilfläche, so daß die gesamte Fläche hell ist.

Der Bildpunkt ist also

- schwarz, solange die Amplitude kleiner als 16,2 V beträgt
- grau, im Bereich von 16,3 bis 17,5 V
- weiß, oberhalb von 17,6 V.

Da die Flüssigkristallschicht in beiden Fällen dieselbe Dicke besitzt, werden keine Farbunterschiede beobachtet.

**Beispiel 2**

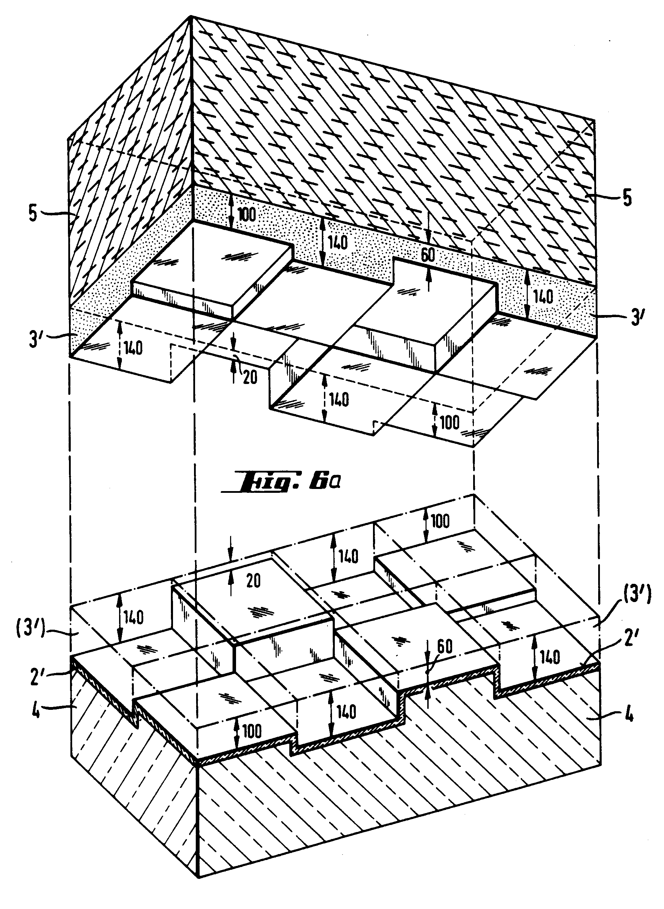

Kontinuierliche Graustufen lassen sich mit einer sich kontinuierlich ändernden Orientierungsschichtdicke bzw. einer anderen dielektrischen Schicht zwischen Flüssigkristall und Elektrode realisieren. In Fig. 5 ist ein solches Beispiel dargestellt, das zu einer flachen Kennlinie des FLC-Displays mit kontinuierlich einstellbaren Graustufen führt. Die Bedeutung der mit Ziffern gekennzeichneten Schichten ist wie im Text erläutert (siehe Fig. 1).

**Beispiel 3**

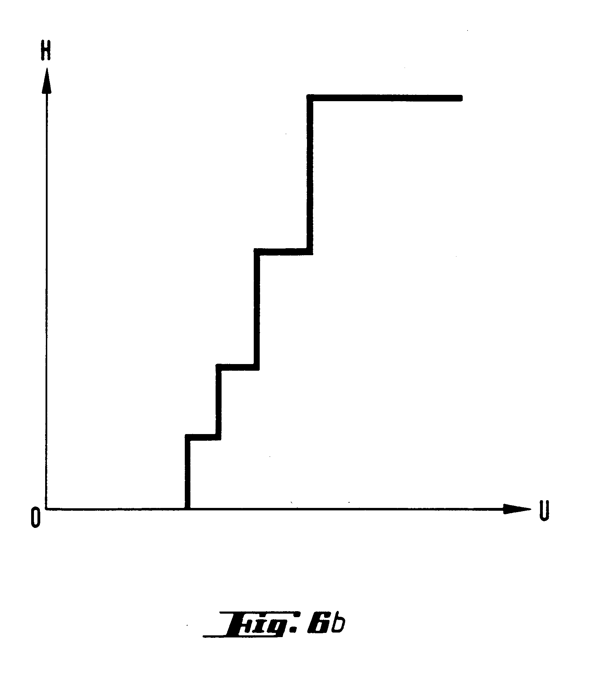

Fig. 6(a) zeigt einen erfindungsgemäßen Bildpunktaufbau mit acht Teilflächen, für die die Orientierungsschichtdicken in Einheiten von Nanometern (20, 60, 100, 140 nm) angegeben sind. Alle Teilflächen erfahren wiederum dieselbe Spannung U und die Flüssigkristallschicht besitzt eine über die Gesamtfläche konstante Dicke. In Fig. 6(b) ist die Helligkeit des Bildpunktes als Funktion der Spannung aufgetragen. Es ergeben sich exponentiell anwachsende Helligkeitsstufen.

Mit der im Beispiel 1 verwendeten FLC-Testmischung ®Felix-1 ergeben sich bei einer Temperatur von 25 °C und einer Pulsbreite von 200 $\mu$s die in Tabelle 1 zusammengestellten Schwellspannungen und Helligkeitswerte.

Tabelle 1

| Exponentiell anwachsende Graustufen (für ®Felix-001, Schichtdicke 2,0 $\mu$m, 25°C) | |
|---|---|
| Spannungsbereich (in Volt) | rel. Helligkeit oder Kontrast (% durchgeschaltete Fläche) |
| 0 - 16,1 | 0 (schwarz) |
| 16,2 - 16,4 | 12,5 (dunkelgrau) |
| 16,5 - 16,7 | 25 (grau) |
| 16,9 - 17,1 | 50 (hellgrau) |
| größer als 17,2 | 100 (weiß) |

**Patentansprüche**

1. Ferroelektrische Flüssigkristall-Schaltvorrichtung oder Flüssigkristall-Anzeigevorrichtung, enthaltend
   - zwei sich gegenüberliegende Glasplatten oder Kunststoffplatten (1, 4);
   - Elektroden (2, 2'), die auf der Innenseite jeder Glas- oder Kunststoffplatte in horizontalen bzw. vertikalen Streifen aufgebracht sind und die Fläche eines oder die Flächen einer Vielzahl von Bildpunkten festlegen;
   - zwei Orientierungsschichten (3, 3'), von denen die eine die Elektroden und die Innenseite der ersten Glas- oder Kunststoffplatte überdeckt und die andere die Elektroden und die Innenseite der zweiten Glas- oder Kunststoffplatte überdeckt;
   - eine ferroelektrische Flüssigkristallschicht (5) konstanter Dicke, die sich zwischen den Glasplatten befindet;
   dadurch gekennzeichnet, daß
   - sich der Abstand zwischen der einen Elektrode und der Flüssigkristallschicht über die Fläche eines Bildpunktes verändert und
   - die auf dieser Elektrode aufgebrachte Orientierungsschicht über die Fläche dieses Bildpunktes eine unterschiedliche Dicke aufweist.

2. Vorrichtung nach Anspruch 1, dadurch gekennzeichnet, daß sich die Dicke der Orientierungsschicht über die Fläche eines Bildpunktes stufenweise ändert.

3. Vorrichtung nach Anspruch 1, dadurch gekennzeichnet, daß sich die Dicke der Orientierungsschicht kontinuierlich über die Fläche eines Bildpunktes ändert.

4. Vorrichtung nach Anspruch 1, 2 oder 3, dadurch gekennzeichnet, daß die ferroelektrische Flüssigkristallschicht im Arbeitsbereich der Vorrichtung als $S_c^*$-Phase vorliegt.

5. Vorrichtung nach einem oder mehreren der Ansprüche 1 bis 4, dadurch gekennzeichnet, daß durch die zusätzliche Verwendung von Farbfiltern die Darstellung farbiger Bilder ermöglicht wird.

6. Verwendung einer Vorrichtung nach einem oder mehreren der Ansprüche 1 bis 5 als elektrooptisches Bauteil.

**Claims**

1. A ferroelectric liquid-crystal switching device or liquid-crystal display device comprising:
   - two glass sheets or plastic sheets (1, 4) opposite one another;
   - electrodes (2, 2') which are applied to the inside of each glass or plastic sheet in horizontal or vertical strips and define the area of a pixel or the areas of a multiplicity of pixels;
   - two alignment layers (3, 3'), of which one covers the electrodes and the inside of the first glass or plastic sheet and the other covers the electrodes and the inside of the second glass or plastic sheet;
   - a ferroelectric liquid-crystal layer (5) of constant thickness which is between the glass sheets;
   wherein

- the distance between one electrode and the liquid-crystal layer varies over the area of the pixel and
- the alignment layer applied to this electrode has varying thickness over the area of this pixel.

2. The device as claimed in claim 1, wherein the thickness of the alignment layer varies stepwise over the area of a pixel.

3. The device as claimed in claim 1, wherein the thickness of the alignment layer varies continuously over the area of a pixel.

4. The device as claimed in claim 1, 2 or 3, wherein the ferroelectric liquid-crystal layer is in the form of an $S_c^*$ phase in the operating range of the device.

5. The device as claimed in one or more of claims 1 to 4, wherein the additional use of coloured filters enables the display of coloured images.

6. The use of a device as claimed in one or more of claims 1 to 5 as an electro-optical component.

**Revendications**

1. Dispositif de couplage ou d'affichage à cristaux liquides ferro-électriques, incluant :
   - deux plaques de verre ou de plastique (1,4) se faisant face ;
   - des électrodes (2,2') qui sont rapportées en bandes respectivement horizontales et verticales sur la face intérieure de chaque plaque de verre ou de plastique, et qui déterminent la surface d'un ou d'une pluralité d'éléments d'image ;
   - deux couches d'orientation (3,3') dont l'une recouvre les électrodes et la face intérieure de la première plaque de verre ou plastique, et l'autre recouvre les électrodes et la face intérieure de la seconde plaque de verre ou plastique ;
   - une couche de cristaux liquides ferro-électriques (5) d'épaisseur constante, qui se trouve entre les plaques de verre ;
   caractérisé en ce que
   - l'écartement séparant l'une des électrodes de la couche de cristaux liquides varie le long de la surface d'un élément d'image, et
   - la couche d'orientation rapportée sur cette électrode présente une épaisseur différente le long de la surface de cet élément d'image.

2. Dispositif selon la revendication 1, caractérisé en ce que l'épaisseur de la couche d'orientation varie de manière étagée le long de la surface d'un élément d'image.

3. Dispositif selon la revendication 1 caractérisé en ce que l'épaisseur de la couche d'orientation varie continûment le long de la surface d'un élément d'image.

4. Dispositif selon la revendication 1, 2 ou 3, caractérisé en ce que la couche de cristaux liquides ferro-électriques est présente dans sa phase $S_c^*$ dans la zone d'action du dispositif.

5. Dispositif selon l'une ou plusieurs des revendications 1 à 4, caractérisé en ce que la représentation d'éléments de couleur est possible grâce à l'utilisation additionnelle de filtres colorés.

6. Utilisation d'un dispositif selon l'une ou plusieurs des revendications 1 à 5 en tant que composant électro-optique.

**Fig. 1**

*Fig. 2*

Fig. 3

Fig. 4

*Fig. 5*

**Fig. 6a**

Fig. 6b